# EUROPÄISCHE PATENTSCHRIFT

(11) **EP 3 925 857 B1**
(45) Veröffentlichungstag und Bekanntmachung des Hinweises auf die Patenterteilung: **14.12.2022**
(21) Anmeldenummer: 20181171.8
(22) Anmeldetag: 19.06.2020
(51) Int. Cl.: B62D 5/00

(54) **DREHBEGRENZUNG FÜR EIN STEER-BY-WIRE LENKSYSTEM**
TORQUE LIMITER FOR A STEER-BY-WIRE STEERING SYSTEM
LIMITATION DE ROTATION POUR UN SYSTÈME DE DIRECTION DIRECTION « STEER BY WIRE »

(43) Veröffentlichungstag der Anmeldung: 22.12.2021
(73) Patentinhaber: CP Tech GmbH, 33142 Büren (DE)
(72) Erfinder: Kälberer, Jürgen, 33129 Delbrück (DE)
(74) Vertreter: Patentanwälte Dörner & Kötter PartG mbB

(56) Entgegenhaltungen:
- DE-A1- 10 017 049
- DE-A1-102018 217 506
- DE-B3-102013 014 138
- US-A1- 2003 184 072
- US-A1- 2019 126 970

## Beschreibung

Die Erfindung betrifft eine Vorrichtung zur Drehbegrenzung der Lenkwelle eines Steer-by-Wire Lenksystems eines Kraftfahrzeuges nach dem Patentanspruch 1.

Unter einem Steer-by-Wire Lenksystem wird in der Kraftfahrzeugtechnik ein System verstanden, bei dem eine Lenkradbewegung über ein Steuergerät ausschließlich elektrisch zu einem elektrischen Aktor geleitet wird, der eine entsprechende Lenkung der Räder ausführt. Das Lenkrad ist hier mit einer Lenkwelle verbunden, deren Drehbewegung von einem Sensor erfasst wird.

Um den maximalen Lenkeinschlag der Räder, durch den sich die maximal mögliche Drehung des Lenkrades ergibt, an den Fahrer zu vermitteln, ist hier ein mechanischer Anschlag erforderlich, der den maximalen Drehwinkel des Lenkrades auf 720 Grad begrenzt. Dies entspricht zwei vollständigen Lenkradumdrehungen.

DE 10 2018 217506 offenbart den Oberbegriff des Anspruchs 1.

Hier setzt die vorliegende Erfindung an. Der Erfindung liegt die Aufgabe zugrunde, einen mechanischen Anschlag für ein Steer-by-Wire-Lenksystem bereitzustellen, der eine Drehbegrenzung der Lenkwelle auf einen Drehwinkel von 720° - oder auch einen anderen definierten maximalen Drehwinkel - ermöglicht. Gemäß der Erfindung wird diese Aufgabe durch eine Vorrichtung mit den Merkmalen des Patentanspruchs 1 gelöst.

Mit der Erfindung ist ein mechanischer Anschlag für ein Steer-by-Wire-Lenksystem bereitgestellt, der eine Drehbegrenzung der Lenkwelle auf Lenkwelle auf einen Drehwinkel von 720° - oder auch einen anderen definierten maximalen Drehwinkel - ermöglicht. Dadurch, dass in einem Gehäuse ein zylinderförmig ausgebildetes Steuerstück und wenigstens ein mit diesem im Eingriff stehendes Blockierstück angeordnet ist, wobei das Steuerstück in dem Gehäuse drehbar gelagert ist, wenigstens eine Führungskulisse, wenigstens ein Anschlag sowie eine axiale Aufnahme zur formschlüssigen Aufnahme eines Mitnehmers der Lenkwelle aufweist und wobei das Blockierstück in dem Gehäuse schwenkbar oder verschiebbar gelagert ist und wenigstens einen Kulissenstift aufweist, der in eine Führungskulisse des Steuerstücks eingreift und über diese derart bewegbar ist, dass eine an dem wenigstens einen Blockierstück angeordnete Anschlagfläche in einer definierten Drehposition des Steuerstücks an dessen Anschlag anliegt, ist eine definierte Bewegung des Blockierstücks über die Führungskulisse des Steuerstücks erzielt, die proportional zur Drehbewegung der Lenkwelle und damit des Lenkrades ist. Bei Erreichen des maximalen Drehwinkels der Lenkwelle schlägt die Anschlagfläche des Blockierstücks an dem Anschlag des Steuerstücks an, wodurch eine weitere Drehung der Lenkwelle und damit des Lenkrades in die jeweilige Drehrichtung blockiert ist.

In Weiterbildung der Erfindung ist die wenigstens eine Führungskulisse des Steuerstücks spiralartig um dessen Rotationachse ausgebildet. Dabei ist vorzugsweise wenigstens ein Anschlag des Steuerstücks durch eine auskragende Nase gebildet, die bevorzugt in einem radial äußeren Bereich des Steuerstücks positioniert ist.

Ausgestaltung der Erfindung ist auf beiden Kreisflächen des Steuerstücks eine Führungskulisse angeordnet, wobei beidseitig des Steuerstücks wenigstens eine Führungsschiene in dem Gehäuse angeordnet ist, in der jeweils ein Blockierstück verschiebbar gelagert ist, das jeweils mit einem Kulissenstift in eine der jeweiligen Führungsschiene zugewandte Führungskulisse eingreift. Hierdurch ist ein Anschlag mehrerer Blockierstücke ermöglicht, wodurch eine sichere Aufnahme auch größerer Lenkanschlagkräfte gewährleistet ist.

In Weiterbildung der Erfindung ist die wenigstens eine Kulissenführung in eine Kulissenscheibe eingebracht, die an dem Steuerstück befestigt ist, wobei das Steuerstück bevorzugt aus Metall und die wenigstens eine Kulissenscheibe bevorzugt aus Kunststoff hergestellt sind. Hierdurch ist die Herstellung der Kulisse vereinfacht. Zudem ist ein Austausch einer defekten Kulisse ermöglicht, ohne das komplette Steuerstück austauschen zu müssen.

In alternativer Ausgestaltung der Erfindung ist eine Führungskulisse auf der Mantelfläche des Steuerstücks angeordnet, die bevorzugt in Art eines metrischen Gewindes eingeformt ist. Dabei weist das Blockierstück zwei parallel zueinander angeordnete Arme auf, durch die eine Achse geführt ist, über die das Blockierstück in dem Gehäuse schwenkbar gelagert ist. Hierdurch ist eine Transformation der Drehbewegung des Steuerstücks in eine Schwenkbewegung des Blockierstücks erzielt. Dabei weisen die Arme des Blockierstücks bevorzugt an ihrer zueinander zugewandten Seite jeweils einen Führungsstift auf, die gegenüberliegend in die Führungskulisse des Steuerstücks eingreifen.

In Weiterbildung der Erfindung ist das Blockierstück im Wesentlichen U-förmig ausgebildet, wobei in dessen bogenförmigen, der Achse gegenüberliegenden Abschnitt wenigstens eine auskragende Lasche angeformt ist, die eine Anschlagfläche zur Anlage an einem dieser Anschlagfläche zugeordneten Anschlag des Steuerstücks aufweist. Hierdurch ist ein Anschlagen der Anschlagfläche der Lasche an einem Anschlag des Steuerstücks bei Erreichen eines definierten Drehwinkels der Lenkwelle und damit auch des Lenkrades erzielt.

In Weiterbildung der Erfindung ist an der Achse ein Federelement angeordnet, über das das Blockierstück mit seinen Führungsstiften gegen die jeweilige Kulissenführung des Steuerstücks vorgespannt ist. Hierdurch ist eine zuverlässige Führung des Blockierstücks über das Steuerstück gewährleistet.

In Weiterbildung der Erfindung sind an dem Gehäuse elastische Dämpfungselemente zur Entkopplung gegenüber einem Lenkgehäuse, an dem es befestigbar ist, angeordnet. Hierdurch ist eine Übertragung von Anschlagkräften auf das Lenkgehäuse vermieden. Zudem ist hierdurch eine akustische Dämpfung eines Lenkanschlags erzielt.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die räumliche Darstellung einer Vorrichtung zur Drehbegrenzung der Lenkwelle eines Steer-by-Wire-Lenksystems in der Vorderansicht;
- Figur 2: die räumliche Darstellung der Vorrichtung aus Figur 1 in der Ansicht von hinten;

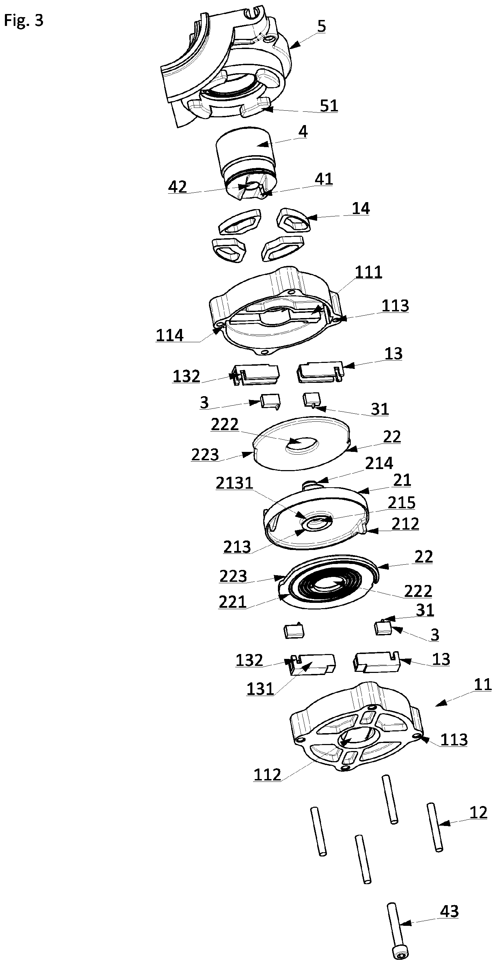

- Figur 3: die Vorrichtung aus Figur 1 in Explosionsdarstellung;
- Figur 4: die räumliche Darstellung einer Vorrichtung zur Drehbegrenzung der Lenkwelle eines Steer-by-Wire-Lenksystems in einer weiteren Ausführungsform in der Ansicht von vorne;
- Figur 5: die räumliche Darstellung der Vorrichtung aus Figur 4 in einer Ansicht von hinten und

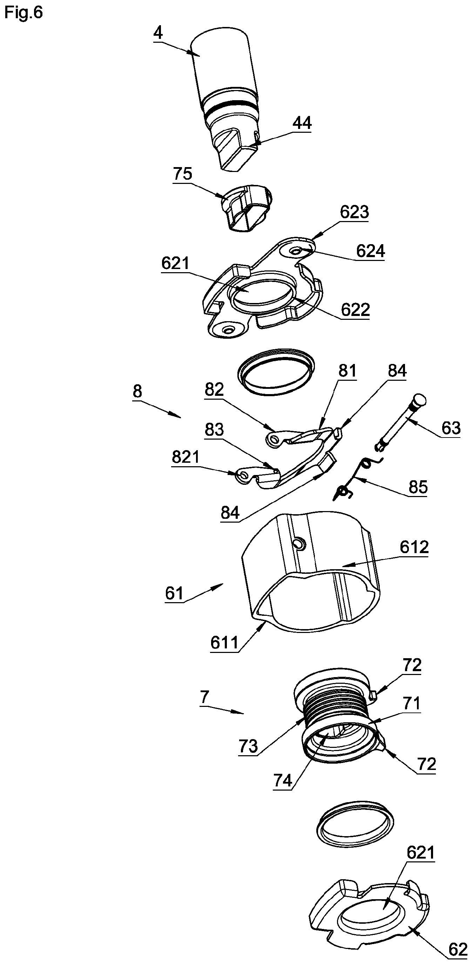

- Figur 6: die Vorrichtung aus Figur 4 in einer Explosionsdarstellung.

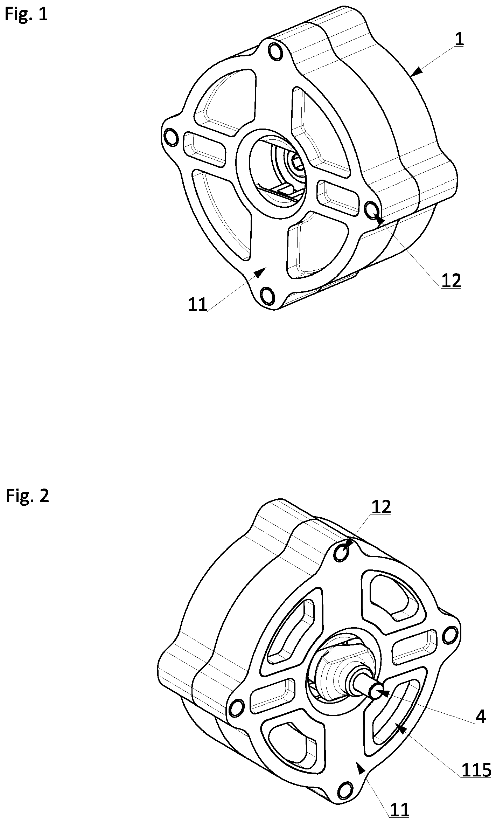

Die als Ausführungsbeispiel gewählte Vorrichtung zur Drehbegrenzung der Lenkwelle eines Steer-by-Wire Lenksystems gemäß Figur 1 umfasst ein Gehäuse 1, in dem ein Steuerstück 2 drehbar gelagert ist, das über einen Mitnehmerzapfen 214 mit einer hierzu korrespondierenden Aufnahme 41 einer Lenkwelle 4 formschlüssig verbindbar ist. Weiterhin sind in dem Gehäuse 1 zwei Blockierstücke 3 linear verschiebbar angeordnet, die jeweils über einen Kulissenstift 31 in einer Führungskulisse 221 des Steuerstücks 2 geführt sind.

Das Gehäuse 1 umfasst zwei Gehäuseschalen 11, die mittels Pressbolzen 12 miteinander verbunden sind. Die Gehäuseschalen 11 sind zylinderförmig ausgebildet und weisen zwei Führungsstege 111 auf, die im Wesentlichen parallel zueinander angeordnet sind und die eine mittig in die Grundfläche angeordnete Bohrung 112 einrahmen. Außen sind an den Gehäuseschalen 11 vier um 90° versetzt zueinander angeordnete, jeweils mit einer Bohrung versehene Formelemente 113 angeformt, durch welche die Pressbolzen 12 geführt sind. In die Grundflächen der Gehäuseschalen 11 sind jeweils um 90° versetzt zueinander zwischen den an der Mantelfläche angeordneten Formelementen 113 vier Ausnehmungen 115 zur Aufnahme von Dämpfungselementen 14 eingebracht.

Zwischen den Führungsstegen 111 der Gehäuseschalen 11 sind jeweils gegenüberliegend zwei Linearführungen 13 angeordnet. Die Linearführungen 13 sind in Art eines U-Profils ausgebildet, dessen parallel zueinander angeordnete Schenkel 131 an einem Ende mit einem Durchgangsschlitz 132 versehen sind. Die Linearführungen 13 sind derart in jeweils eine hierfür in dem Formelement 113 vorgesehene Nut eingesetzt, dass die Anschlagnasen 212 der Trägerscheibe 21 bei deren Rotation die Durchgangsschlitze 132 der Linearführungen 13 durchlaufen. Dabei erstreckt sich die jeweilige Linearführung 13 bis zur mittig in die Grundfläche der jeweiligen Gehäuseschale 11 eingebrachten Bohrung 112.

Das Steuerstück 2 besteht im Wesentlichen aus einer Trägerscheibe 21, die zwei gegenüberliegend angeordnete Kulissenscheiben 22 aufnimmt. Die Trägerscheibe 21 ist im Wesentlichen als zylinderförmiges Metallteil, insbesondere Stahl- oder Aluminiumteil ausgebildet und weist an ihren beiden Deckflächen einen umlaufenden ringförmigen Kragen 211 auf, an dessen Innenwandung jeweils zwei diametral gegenüberliegend angeordnete, axial auskragende Anschlagnasen 212 angeformt sind. Konzentrisch zu dem Kragen 211 einer jeden Deckfläche ist ein kreisringförmiges Ringstück 213 angeformt, das radial umlaufend mit einer Rastnut 2131 versehen ist. Zur Aufnahme einer Lenkwelle 4 ist an einer Deckfläche der Trägerscheibe 21 innerhalb des Ringstücks 213 ein Mitnehmerzapfen 214 angeformt.

Die Kulissenscheiben 22 sind im Wesentlichen identisch ausgeführt und als kreisrunde flache Scheiben ausgebildet, in die an ihrer der Trägerscheibe 21 abgewandten Seite eine spiralförmige Führungskulisse 221 eingebracht ist. Im Ausführungsbeispiel sind die Kulissenscheiben 22 aus Kunststoff hergestellt. Mittig ist in die Kulissenscheiben 22 zentrisch eine kreisrunde Bohrung 222 eingebracht, deren Innendurchmesser im Wesentlichen dem Außendurchmesser der Rastnut 2131 der Ringstücke 213 der Trägerscheibe 21 entspricht. In die Mantelfläche der Kulissenscheiben 22 sind jeweils diametral gegenüberliegend zwei Einkerbungen 223 eingebracht. Jeweils eine Kulissenscheibe 22 ist auf einer Seite der Trägerscheibe 21 auf diese aufgebracht, wobei durch deren Bohrung 222 ein Ringstück 213 hindurchragt, das mit dieser verrastet ist, sodass die Kulissenscheibe 22 in der Rastnut 2131 des Ringstücks 231 gehalten ist. Die Anschlagnasen 212 der Trägerscheibe 21 sind dabei in einer Einkerbung 223 der jeweiligen Kulissenscheibe 22 positioniert, sodass die beiden Kulissenscheiben 22 von jeweils einem Kragen 211 eingerahmt axial und radial formschlüssig mit der Trägerscheibe 21 verbunden sind. Alternativ oder zusätzlich können die Kulissenscheiben 22 mit der Trägerscheibe 21 verklebt sein.

Die Blockierstücke 3 sind im Wesentlichen als quaderförmige Kunststoffteile ausgebildet, wobei eine Deckseite abgeschrägt ist, wodurch eine Keilform erzielt ist. Die Breite der Blockierstücke 3 entspricht im Wesentlichen dem Abstand der beiden Schenkel 131 der diese jeweils aufnehmenden Linearführung 13. An ihrer der Linearführung 13 abgewandten Seite ist an die Blockierstücke 3 jeweils ein Kulissenstift 31 angeformt.

In jede der vier Linearführungen 13 ist ein Blockierstück 3 eingebracht. Jeweils zwei auf einer gemeinsamen Geraden in einer Linearführung 13 verschiebbar gelagerte Blockierstücke 3 greifen mit ihrem Kulissenstift 31 in eine Führungskulisse 221 einer Kulissenscheibe 22 ein.

Das Gehäuse 1 ist mit einem Lenkgehäuse 5 formschlüssig verbunden, das hierzu Formstücke 51 aufweist, die in die mit Dämpfungselementen 14 versehenen Ausnehmungen 115 des Gehäuses 1 eingreifen. Das Gehäuse 1 ist so gegenüber dem Lenkgehäuse 5 entkoppelt, wodurch eine Dämpfung von auf das Gehäuse 1 einwirkenden Anschlagkräften erzielt ist.

Der Mitnehmerzapfen 214 des Steuerstücks 2 ist in eine mit diesem korrespondierenden Aufnahme 41 einer Lenkwelle 4 eingesetzt und über eine Schraube 43, die durch eine axiale Bohrung des Mitnehmerzapfens 214 geführt ist und in einer Gewindebohrung 42 der Lenkwelle 4 eingeschraubt ist, mit dieser verbunden. Durch eine Drehung der Lenkwelle 4 erfolgt zugleich eine Drehung des mit dieser formschlüssig verbundenen Steuerstücks 2.

Aufgrund der entgegengesetzten Anordnung der beiden Kulissenscheiben 22 an der Trägerscheibe 21 ist durch die Drehung des Steuerstücks 2 in eine Drehrichtung eine Aufwärtsbewegung der mit der Führungskulisse 221 einer Kulissenscheibe 22 in Eingriff stehenden Blockierstücke 3 sowie gleichzeitig eine Abwärtsbewegung der mit der Führungskulisse 221 der anderen Kulissenscheibe 22 in Eingriff stehenden Blockierstücke 3 bewirkt. Bei Erreichen des maximalen Drehwinkels, der im Ausführungsbeispiel in jede Drehrichtung 360° beträgt, was einem maximalen Gesamtdrehwinkel von 720° entspricht, schlägt das untere der in Abwärtsbewegung befindlichen Blockierstücke 3 an der unteren Anschlagnase 212 und das obere der auf der gegenüberliegenden Seite in Aufwärtsbewegung befindlichen Blockierstücke 3 an der diametral gegenüberliegend angeordneten, oberen Anschlagnase 212 der Trägerscheibe 21 des Steuerstücks an. Bei umgekehrter Drehrichtung der mit dem Steuerstück 2 verbundenen Lenkwelle 4 ist eine Bewegung der Blockierstücke 3 in die jeweils entgegengesetzte Richtung erzielt. Bei Erreichen des maximalen Drehwinkels schlägt nun das jeweils andere der beiden Blockierstücke 3 auf jeder Seite des Steuerstücks 2 an die Anschlagnasen 212 der Trägerscheibe 21 an.

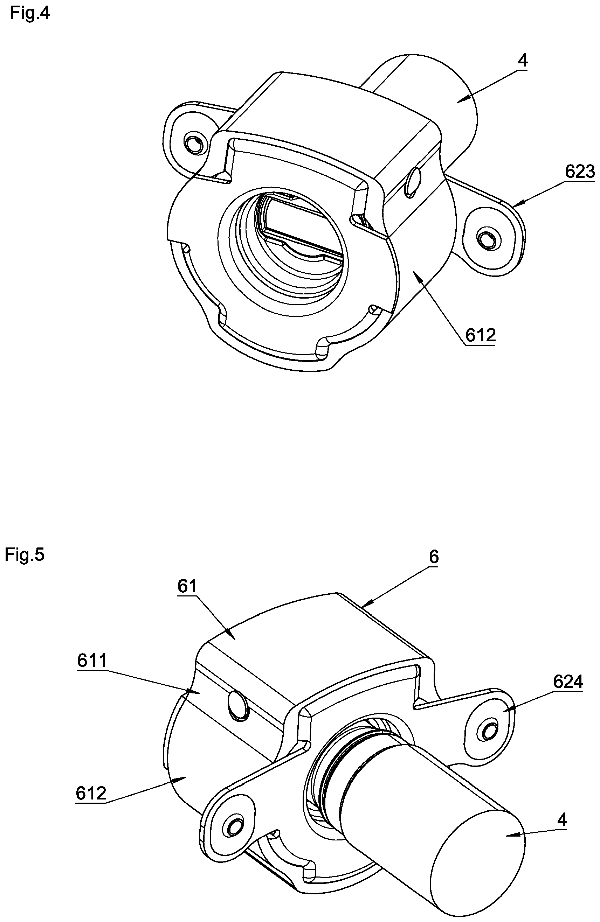

Im Ausführungsbeispiel gemäß Figur 4 ist das Steuerstück 7 als zylindrische Welle ausgebildet, an deren beiden Enden ein ringförmiger durchmesservergrößerter Flansch 71 angeformt ist. Die beiden Flansche 71 weisen gegenüberliegend jeweils eine radial auskragende Anschlagnase 72 auf. Zwischen den Flanschen 71 ist die Außenmantelfläche des Steuerstücks 7 mit einer spiralförmigen Führungskulisse 73 versehen, die im Ausführungsbeispiel in Art eines metrischen Außengewindes ausgebildet ist.

Das Steuerstück 7 ist drehbar in einem Gehäuse 6 gelagert. Das Gehäuse 6 umfasst einen Gehäusemantel 61, auf den beidseitig ein Gehäusedeckel 62 aufgebracht ist, der zentrisch mit einer kreisrunden Durchführung 621 versehen ist, die durch einen axial in Richtung des Gehäusemantels 1 gerichteten Kragen 622 begrenzt ist. Der Kragen 622 der Gehäusedeckel 62 nimmt jeweils einen Lagerring 63 auf. Auf den beiden Lagerringen 63 ist das Steuerstück 7 mit seinem Flanschen 71 drehbar gelagert.

Der Gehäusemantel 61 ist im Wesentlichen in Form eines Hohlquaders ausgebildet, dessen Längsseitenwände 611 bereichsweise kreisbogenförmig ausgestellt sind. Die kreisbogenförmigen Abschnitte 612 der Längsseitenwände 611 verlaufen im Wesentlichen parallel zu dem von dem Gehäuse 1 aufgenommenen Steuerstück 7. Beabstandet zu den kreisbogenförmigen Abschnitten 612 ist an einer Seite zwischen den Längsseitenwänden 611 eine Achse 63 angeordnet, auf der ein Blockiertstück 8 schwenkbar gelagert ist.

Das Blockierstück 8 ist im Wesentlichen als U-förmiges Stanzblechbiegeteil ausgebildet und weist an seinen beiden gegenüberliegend angeordneten Schenkeln 81 jeweils einen rechtwinklig abgewinkelten Schwenkarm 82 auf, der jeweils mit einer Bohrung 821 versehen ist, durch welche die Achse 63 geführt ist. Beabstandet zu der Bohrung 821 ist an den Schwenkarmen 82 jeweils ein orthogonal zu diesen nach innen gerichteter Kulissenstift 83 angeformt. An seiner den Schwenkarmen 82 gegenüberliegenden Unterseite sind an dem Blockierstück 8 nebeneinander zwei gegensätzlich abgewinkelte Anschlaglaschen 84 angeordnet. Die beiden gegenüberliegend angeordneten Kulissenstifte 83 des Blockierstücks 8 greifen in die Führungskulisse 73 des Steuerstücks ein. Über eine Schenkelfeder 85, die auf der Achse 63 angeordnet ist, ist das Blockierstück 3 mit seinen Kulissenstiften 83 gegen die Führungskulisse 73 vorgespannt, wodurch die Kulissenstifte 83 zuverlässig in der Führungskulisse 73 gehalten sind.

In das Steuerstück 7 ist axial eine Durchführung 74 eingebracht, die ein Passstück 75 mit einem im Wesentlichen quaderförmigen Eingriff aufweist. An die Lenkwelle 4 ist endseitig ein im Wesentlichen quaderförmig ausgebildeter Mitnehmer 44 angeformt, der in das Passstück 75 eingreift, wodurch die Lenkwelle 4 formschlüssig mit dem Steuerstück 7 verbunden ist.

Zur Befestigung des Gehäuses 6 an einem Lenkgehäuse 5 weist der dem Lenkgehäuse zugewandte Gehäusedeckel 62 zwei seitlich auskragende Flügel 623 auf, die zur Entkopplung gegenüber dem Lenkgehäuse 5 mit Dämpfungselementen 624 versehen sind.

Durch eine Drehung der Lenkwelle 4 erfolgt zugleich eine Drehung des mit dieser formschlüssig verbundenen Steuerstücks 7. Hierbei werden die in der Führungskulisse 73 geführten Kulissenstifte 83 des Blockierstücks 8 axial bewegt, wodurch das Blockierstück 8 um die Achse 63 verschwenkt wird. Bei Erreichen des maximalen Drehwinkels, der im Ausführungsbeispiel in jede Drehrichtung 360° beträgt, was einem maximalen Gesamtdrehwinkel von 720° entspricht, schlägt das Blockierstück 3 mit einer Anschlagasche 84 an eine Anschlagnase 72 des Steuerstücks 7 an. Durch eine Drehung der Lenkwelle 4 in die entgegengesetzte Richtung folgen die Kulissenstifte 83 des Blockierstücks 8 wiederum der Führungskulisse 73, bis die andere Anschlaglasche 84 an die gegenüberliegende Anschlagnase 72 des Steuerstücks 7 anschlägt.

## Patentansprüche

1. Vorrichtung zur Drehbegrenzung der Lenkwelle (4) eines Steer-by-Wire , Lenksystems eines Kraftfahrzeuges, mit einem Gehäuse (1, 6), das ein zylinderförmig ausgebildetes Steuerstück (2, 7) und wenigstens ein mit diesem im Eingriff stehendes Blockierstück (3, 8) aufnimmt, wobei das Steuerstück (2, 7) in dem Gehäuse (1, 6) drehbar gelagert ist, wenigstens eine Führungskulisse (221, 73), wenigstens einen Anschlag (212, 72) sowie eine axiale Aufnahme zur formschlüssigen Aufnahme eines Mitnehmers der Lenkwelle (4) aufweist und wobei das Blockierstück (3, 8) in dem Gehäuse (1, 6) schwenkbar oder verschiebbar gelagert ist und wenigstens einen Kulissenstift (31, 83) aufweist, der in eine Führungskulisse (221, 73) des Steuerstücks (2, 7) eingreift und über diese derart bewegbar ist, dass eine an dem wenigstens einem Blockierstück (3, 8) angeordnete Anschlagfläche in einer definierten Drehposition des Steuerstücks (2, 7) an dessen Anschlag (212, 72) anliegt, **dadurch gekennzeichnet, dass**
entweder
auf beiden Kreisflächen des Steuerstücks (2) eine Führungskulisse (221) angeordnet ist, wobei beidseitig des Steuerstücks (2) wenigstens eine Führungsschiene (13) in dem Gehäuse angeordnet ist, in der jeweils ein Blockierstück (3) verschiebbar gelagert ist, das jeweils mit einem Kulissenstift (31) in eine der jeweiligen Führungsschiene (13) zugewandte Führungskulisse (221) eingreift,
oder
dass eine Führungskulisse (73) auf der Mantelfläche des Steuerstücks (7) angeordnet ist, wobei das Blockierstück (8) zwei parallel zueinander angeordnete Arme (82) aufweist, durch die eine Achse (63) geführt ist, über die das Blockierstück (8) in dem Gehäuse (6) schwenkbar gelagert ist.

2. Vorrichtung nach Anspruch 1, **dadurch gekennzeichnet, dass** die wenigstens eine Führungskulisse (221, 73) des Steuerstücks (2, 7) spiralartig um dessen Rotationsachse ausgebildet ist

3. Vorrichtung nach Anspruch 1 oder 2, **dadurch gekennzeichnet, dass** wenigstens ein Anschlag des Steuerstücks (2) durch eine axial auskragende Nase (212) gebildet ist, die bevorzugt in einem radial äußeren Bereich positioniert ist.

4. Vorrichtung nach Anspruch 1, **dadurch gekennzeichnet, dass** die wenigstens eine Kulissenführung (221) in eine Kulissenscheibe (22) eingebracht ist, die an einer Trägerscheibe (21) befestigt ist, wobei bevorzugt die Trägerscheibe (21) aus Metall und die wenigstens eine Kulissenscheibe (22) aus Kunststoff hergestellt sind.

5. Vorrichtung nach Anspruch 1, **dadurch gekennzeichnet, dass** wenn die Führungskulisse (73) auf der Mantelfläche des Steuerstücks (7) angeordnet ist, die in Art eines metrischen Gewindes eingeformt ist.

6. Vorrichtung nach Anspruch 1, **dadurch gekennzeichnet, dass** die Arme (82) an ihrer zueinander zugewandten Seite jeweils einen Kulissenstift (83) aufweisen, die gegenüberliegend in die Führungskulisse (73) des Steuerstücks (7) eingreifen.

7. Vorrichtung nach Anspruch 1 oder 6, **dadurch gekennzeichnet, dass** das Blockierstück (8) im Wesentlichen U-Förmig ausgebildet ist, wobei an dessen bogenförmigen, der Achse (63) gegenüberliegenden Abschnitt wenigstens eine auskragende Lasche (84) angeformt ist, die eine Anschlagfläche zur Anlage an einem dieser zugeordneten Anschlag (72) des Steuerstücks (7) aufweist.

8. Vorrichtung nach einem der Ansprüche 1, 6 und 7, **dadurch gekennzeichnet, dass** an der Achse (63) ein Federelement angeordnet ist, über das das Blockierstück (8) mit seinen Kulissenstiften (83) gegen die jeweilige Führungskulisse (73) des Steuerstücks (7) vorgespannt ist.

9. Vorrichtung nach einem der vorgenannten Ansprüche, **dadurch gekennzeichnet, dass** an dem Gehäuse (1, 6) elastische Dämpfungselemente (14, 624) zur Entkopplung gegenüber einem Lenkgehäuse (5), an dem es befestigbar ist, angeordnet sind.

## Claims

1. Device for limiting the rotation of the steering shaft (4) of a steer-by-wire steering system of a motor vehicle, having a housing (1, 6), which accommodates a cylindrical control piece (2, 7) and at least one blocking piece (3, 8), which is in engagement with the latter, wherein the control piece (2, 7) is rotatably mounted in the housing (1, 6), has at least one guide slot (221, 73), at least one stop (212, 72) and an axial receptacle for positive reception of a driver of the steering shaft (4) and wherein the locking piece (3, 8) is pivotably or displaceably mounted in the housing (1, 6) and has at least one link pin (31, 83), which engages in a guide slot (221, 73) of the control piece (2, 7) and can be moved via the latter in such a manner that a stop surface arranged on the at least one locking piece (3, 8) bears against the stop (212, 72) of the control piece (2, 7) in a defined rotational position of the latter, **characterised in that**
either
a guide slot (221) is arranged on both circular surfaces of the control piece (2), wherein at least one guide rail (13) is arranged in the housing on both sides of the control piece (2), in each of which a blocking piece (3) is displaceably mounted, which in each case engages with a link pin (31) in a guide slot (221) facing the respective guide rail (13)
or
**in that** a guide slot (73) is arranged on the outer surface of the control piece (7), wherein the blocking piece (8) has two arms (82) arranged parallel to one another, through which an axle (63) is guided, via which the blocking piece (8) is pivotably mounted in the housing (6).

2. Device according to claim 1, **characterised in that** the at least one guide slot (221, 73) of the control piece (2, 7) is formed spirally around its axis of rotation.

3. Device according to claim 1 or 2, **characterised in that** at least one stop of the control piece (2) is formed by an axially projecting lug (212), which is preferably positioned in a radially outer region.

4. Device according to claim 1, **characterised in that** the at least one guide slot (221) is inserted in a link disc (22), which is attached to a carrier disc (21), wherein the carrier disc (21) is preferably made of metal and the at least one link disc (22) is made of plastic.

5. Device according to claim 1, **characterised in that** when the guide slot (73) is arranged on the outer surface of the control piece (7), it is moulded in the manner of a metric thread.

6. Device according to claim 1, **characterised in that** the arms (82) each have a link pin (83) on their side facing one another, which engage opposite one another in the guide slot (73) of the control piece (7).

7. Device according to claim 10 or 11, **characterised in that** the blocking piece (8) is substantially U-shaped, wherein at least one projecting lug (84) is formed on its arcuate section opposite the axle (63), which lug has a stop surface for abutment against a stop (72) of the control piece (7) assigned thereto.

8. Device according to claim 10 to 12, **characterised in that** a spring element is arranged on the axle (63), via which the blocking piece (8) is pretensioned with its link pins (83) against the respective guide slot (73) of the control piece (7).

9. Device according to one of the preceding claims, **characterised in that** elastic damping elements (14, 624) are arranged on the housing (1, 6) for decoupling with respect to a steering housing (5), to which it can be fastened.

## Revendications

1. Dispositif de limitation de rotation de l'arbre de direction (4) d'un système de direction « Steer by Wire » d'un véhicule, avec un boîtier (1, 6) qui reçoit un élément de commande de forme cylindrique (2, 7) et au moins un élément de blocage (3, 8) engrené dans ce dernier, sachant que l'élément de commande (2, 7) est logé dans le boîtier (1, 6) de manière à pouvoir tourner et présente au moins une coulisse de guidage (221, 73), au moins une butée (212, 72) ainsi qu'un logement axial pour la réception mécanique d'un entraîneur de l'arbre de direction (4) et sachant que l'élément de blocage (3, 8) est logé dans le boîtier (1, 6) de manière à pouvoir pivoter ou être déplacé et présente au moins une tige de coulisse (31, 83) qui s'engrène dans une coulisse de guidage (221, 73) de l'élément de commande (2, 7) et peut être déplacé par le biais de cette dernière de telle manière que, dans une position de rotation définie de l'élément de commande (2, 7), une surface de butée disposée sur ledit au moins un élément de blocage (3, 8) est en contact avec sa butée (212, 72), **caractérisé en ce que**, soit une coulisse de guidage (221) est disposée sur les deux surfaces circulaires de l'élément de commande (2), sachant qu'au moins un rail de guidage (13), dans lequel un élément de blocage (3) qui s'engrène respectivement avec une tige de coulisse (31) dans une coulisse de guidage (221) tournée vers le rail de guidage (13) correspondant est respectivement logé de manière à pouvoir être déplacé, est disposé dans le boîtier des deux côtés de l'élément de commande (2), soit une coulisse de guidage (73) est disposée sur la surface enveloppante de l'élément de commande (7), sachant que l'élément de blocage (8) présente deux bras (82) disposés parallèlement l'un par rapport à l'autre, à travers lesquels un axe (63) par le biais duquel l'élément de blocage (8) est logé dans le boîtier (6) de manière à pouvoir pivoter est guidé.

2. Dispositif selon la revendication 1, **caractérisé en ce que** ladite au moins une coulisse de guidage (221, 73) de l'élément de commande (2,7) est formée en spirale autour de son axe de rotation.

3. Dispositif selon l'une quelconque des revendications 1 ou 2, **caractérisé en ce qu'**au moins une butée de l'élément de commande (2) est formée par un nez axialement en saillie (212) de préférence positionné dans une zone extérieure radiale.

4. Dispositif selon la revendication 1, **caractérisé en ce que** ledit au moins un guide de coulisse (221) est introduit dans une rondelle de coulisse (22) fixée à une rondelle de support (21), sachant que la rondelle de support (21) est en métal et ladite au moins une rondelle de coulisse (22) en plastique.

5. Dispositif selon la revendication 1, **caractérisé en ce que** lorsque la coulisse de guidage (73) est disposée sur la surface enveloppante de l'élément de commande (7), elle est moulée à la manière d'un filetage métrique.

6. Dispositif selon la revendication 1, **caractérisé en ce que** les bras (82) présentent respectivement sur leurs côtés tournés l'un vers l'autre une tige de coulisse (83) qui s'engrène en face dans la coulisse de guidage (73) de l'élément de commande (7).

7. Dispositif selon l'une quelconque des revendications 1 ou 6, **caractérisé en ce que** l'élément de blocage (8) est essentiellement en forme de U, sachant qu'au moins une languette en saillie (84), qui présente une surface de butée destinée à être mise en contact avec une butée (72) qui lui est attribuée, est formée sur sa section en forme d'arc en face de l'axe (63).

8. Dispositif selon l'une quelconque des revendications 1, 6 et 7, **caractérisé en ce qu'**un élément à ressort par le biais duquel l'élément de blocage (8) est prétendu contre la coulisse de guidage respective (73) de l'élément de commande (7) avec ses tiges de coulisse (83) est disposé sur l'axe (63).

9. Dispositif selon l'une quelconque des revendications précédentes, **caractérisé en ce que** sur le boîtier (1,6), des éléments d'amortissement élastiques (14, 624) destinés à assurer le découplage par rapport à un carter de direction auquel il peut être fixé sont disposés.
